# EUROPEAN PATENT SPECIFICATION

(11) **EP 1 790 891 B1**
(45) Date of publication and mention of the grant of the patent: **17.06.2009**
(21) Application number: 06124103.0
(22) Date of filing: 15.11.2006
(51) Int. Cl.: F16K 31/383

(54) **Dispensing apparatus**
Abgabevorrichtung
Appareil de distribution

(30) Priority: 25.11.2005 IT MO20050313
(43) Date of publication of application: 30.05.2007
(73) Proprietor: Leotech S.r.l., 38050 Canal San Bovo TN (IT)
(72) Inventor: Corona, Italo, 38050 Canal San Bovo (TN) (IT)
(74) Representative: Crugnola, Pietro

(56) References cited:
- EP-A- 0 811 795
- GB-A- 1 431 695
- GB-A- 1 457 946

## Description

The invention relates to a dispensing apparatus, in particular a dispensing apparatus arranged for dispensing a flow of water and air to an apparatus for making artificial snow and a method for driving the aforesaid dispensing apparatus.

It is known that, for making artificial snow, favourable temperature and humidity conditions and the presence of freezing nuclei are necessary.

For this reason, the apparatuses for making artificial snow comprise nucleating nozzles arranged for nebulizing a mixture comprising air and water for generating the freezing nuclei, and dispensing nozzles arranged for nebulizing water for supplying the aforesaid freezing nuclei around which snow crystals are generated with further raw material (in addition to the humidity already present in the atmosphere). The dispensing nozzles and the nucleating nozzles are arranged for operating in groups, or in series.

The nucleating nozzles may comprise a first series of nozzles, whilst the dispensing nozzles may comprise a second and a third series of nozzles.

The first series of nozzles is constantly supplied to supply water and air to the nucleating nozzles, whilst the second series and/or the third series are supplied with water only in certain temperature conditions when it is possible to make a greater quantity of artificial snow.

Dispensing apparatuses are known that are provided with solenoid valves arranged for adjusting the flow of water to an apparatus for making artificial snow.

A drawback of known dispensing apparatuses is that they need electric energy to drive the solenoid valves.

Electric energy, in addition to not being in itself cheap, requires a suitable wiring network to be installed in order to be used.

This wiring network entails considerable costs for the purchase, installation and maintenance thereof.

In particular, installation and maintenance are very difficult and laborious, inasmuch as the apparatuses for making artificial snow are often positioned in inaccessible zones located on mountain slopes that are difficult to access.

GB 1431695 discloses a controller for use with a main valve actuator operated by varying fluid pressure on one side thereof. The controller comprises an indexable member, indexing means adapted to index the indexable member in response to fluid pressure, a pilot valve adapted for communication with said one side of the main valve actuator so as to control the fluid pressure thereon, means for opening the pilot valve.

The pilot valve is controlled by the indexable member, and the indexing means is movable, in response to a change in fluid pressure, from a first position in which the pilot valve is closed, to a second position where it has indexed the indexable member while the pilot valve remains closed. The position of the indexable member determining whether or not the means for opening the pilot valve can be moved to a valve opening position by an elevated line pressure above the level at which indexing occurs.

GB 1457946 discloses a combination for use in a pressurized liquid supply system including a main valve body through which liquid flow is to be controlled. The combination comprises main valving means including a stopper projecting for installation and movement in the body to control liquid flow in the system, and control means adapted to be mounted on the body and operable to cycle the movement of said valving means at predetermined time intervals.

EP 0811795 discloses a servo-controlled water, with a valve seat which is arranged between an inlet and an outlet and is capable of being closed by a first movable closing part. A control chamber is connected to the inlet by a throttle opening and is connected to another chamber by a pilot valve, which has a second closing part for releasing pressure. The second closing part for opening and closing the pilot valve is directly operable by a pressure medium and consists of a differential piston. The opening in the pilot valve penetrates a fixed wall of the control chamber.

WO 02/061516 teaches a valve unit comprising a valve casing having a suction port, a plurality of delivery ports, valve seat parts installed inside the delivery ports, valve bodies, and cams installed along the axial direction of a rotatable main shaft at positions opposed to the valve seat parts and brought into contact with the valve bodies to adjust the openings of the valves.

An object of the invention is to improve dispensing apparatuses, in particular dispensing apparatuses arranged for dispensing a flow of water and air to an apparatus for making artificial snow.

Another object is to obtain dispensing apparatuses provided with valves that do not need electric energy to be driven.

In a first aspect of the invention, there is provided a dispensing apparatus as defined in claim 1.

In a second aspect of the invention, there is provided a method for driving fluid dispensing means, as defined in claim 11.

Owing to these aspects of the invention, it is possible to make dispensing apparatuses that can operate without using electric energy, with consequent financial savings.

In particular, it is possible to obtain dispensing apparatuses that are drivable by means of compressed air.

In this way, electric cables are no longer necessary for conveying the electric energy, with consequent reduction of the costs connected therewith.

The invention can be better understood and implemented with reference to the attached drawings, which illustrate some embodiments thereof by way of non-limiting example, in which:
Figure 1 is a lateral side view of a dispensing apparatus;
Figure 2 is a frontal schematic view of the dispensing apparatus in Figure 1;
Figure 3 is a schematic section taken along the plane III-III of the dispensing apparatus in Figure 1;
Figure 4a is a schematic section taken along the plane IV-IV of the dispensing apparatus in Figure 1 in a first working position;
Figure 4b is a schematic section taken along the plane IV-IV of the dispensing apparatus in Figure 1 in a second working position;
Figure 5 is a schematic section taken along the plane V-V of the dispensing apparatus in Figure 1 in a first operating configuration;
Figure 6 is a section view of an enlarged detail in Figure 5;
Figure 7 is a section view like the one in Figure 6 of a further enlarged detail in Figure 5;
Figure 8 is a fragmentary schematic section taken along the plane V-V of the dispensing apparatus in Figure 1 in a second operating configuration;
Figure 9 is an enlarged detail in Figure 8;
Figure 10 is an enlarged detail in Figure 8;
Figure 11 is a section view of an enlarged detail of a further embodiment of the dispensing apparatus in Figure 1;
Figure 12 is a section view of a further enlarged detail of a further embodiment of the dispensing apparatus in Figure 1;
Figure 13 is a section like the one in Figure 11 of an air module associable with the dispensing apparatus in Figure 1.

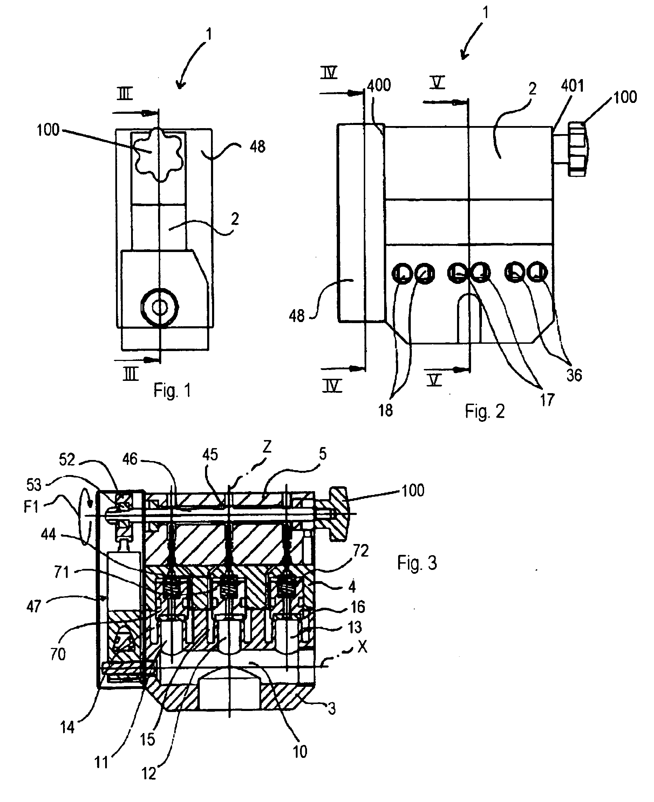

With reference to Figures 1 to 3, there is shown a dispensing apparatus 1 arranged for dispensing a flow of water and air to an apparatus for making artificial snow, which is not shown.

The dispensing apparatus 1 is provided with a main body 2 comprising a first block 3, a second block 4 and a third block 5, the second block 4 being interposed between the first block 3 and the third block 5.

The first block 3 comprises a main water intake conduit 10 extending along a first axis X, and arranged for receiving a flow of water coming from a collecting basin, which is not shown.

The main conduit 10 is provided with a first intake conduit 11, a second intake conduit 12 and a third intake conduit 13, extending along directions substantially parallel to a second axis Z, that is transverse to said first axis X.

The first intake conduit 11, the second intake conduit 12 and the third intake conduit 13 lead respectively into a first chamber 14, into a second chamber 15 and into a third chamber 16 obtained in the first block 3.

The first chamber 14, the second chamber 15 and the third chamber 16 communicate with first dispensing conduits 36, second dispensing conduits 17 and with third dispensing conduits 18 arranged for dispensing water to respective nucleating and dispensing nozzles and positioned upstream of the dispensing apparatus 1 and included in the apparatus for making artificial snow.

In other words, in use, the first chamber 14, the second chamber 15 and the third chamber 16 are interposed between the first intake conduit 11, the second intake conduit 12, the third intake conduit 13 and the first dispensing conduits 36, the second dispensing conduits 17 and the third dispensing conduits 18.

The first chamber 14, the second chamber 15 and the third chamber 16 are arranged for receiving respectively, in use, at least a portion of first valve means 70, second valve means 71 and third valve means 72.

The first valve means 70, the second valve means 71 and the third valve means 72 are arranged for adjusting a passage of water respectively between the first intake conduit 11, the second intake conduit 12, the third intake conduit 13 and the first dispensing conduits 36, the second dispensing conduits 17 and the third dispensing conduits 18.

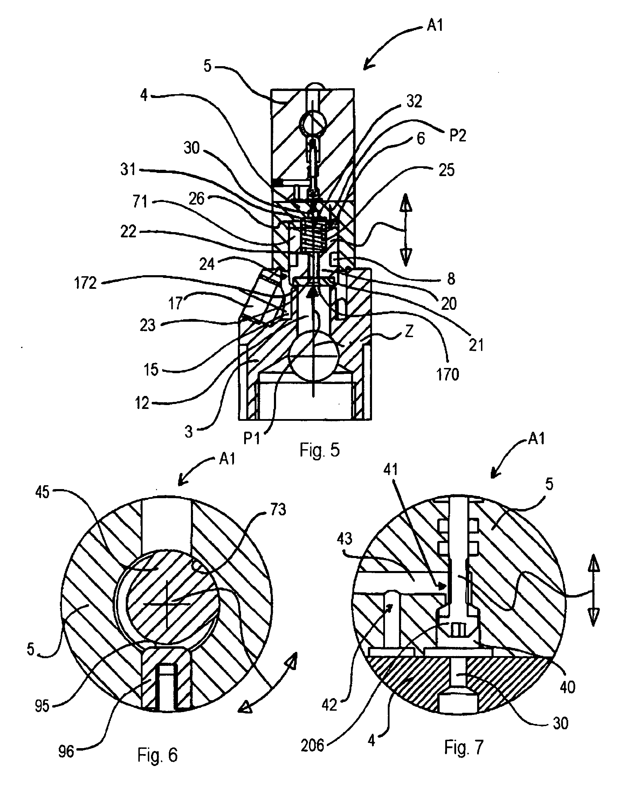

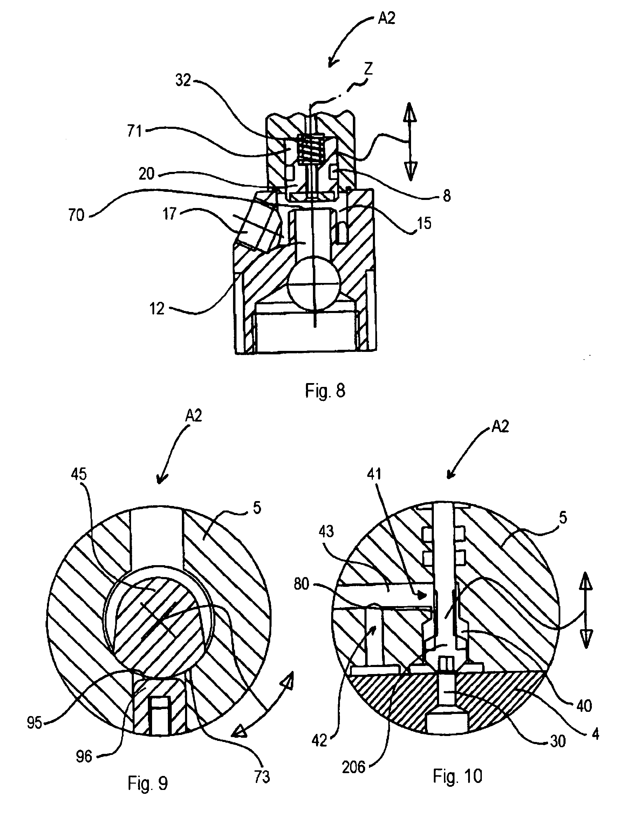

The second valve means 71, shown in detail in Figures 5 and 8, comprises a valve body 20, extending and movable along the second axis Z, to an end 24 of which a plate 21 is fixed.

The valve body 20 and the plate 21 are provided respectively with a passage 22 and with a hole 23, extending around the second axis Z and substantially concentric.

The passage 22 makes the hole 23 communicate with a recess 25 obtained on an end surface 26 of the valve body 20, the end surface 26 being opposite the end 24.

The valve body 20 is received, in use, in a seat 6 obtained in the second block 4, between the valve body 20 and the seat 6 there being provided seals 8.

The second block 4 is further provided with a connecting conduit 30, extending substantially around the second axis Z.

The connecting conduit 30 is provided with a widened portion 31, facing, in use the recess 25.

The recess 25 and the widened portion 31 are arranged for receiving elastic means, for example a return spring 32.

The connecting conduit 30, shown in detail in Figures 7 and 10, is arranged for connecting the seat 6 to a further seat 40, obtained in the third block 5, extending substantially around the second axis Z.

The further seat 40 is further connected to a discharge conduit 42.

The discharge conduit 42 comprises a first portion 43 obtained in the third block 5 (Figure 7) and a second portion 44 obtained in the second block 4.

In this way, the discharge conduit 42 connects the further seat 40 to the second chamber 15.

The further seat 40 is arranged for receiving an active portion 206 of valve means 41 extending and movable along the second axis Z, the valve means 41 being arranged for adjusting a passage of water between the further seat 40 and the discharge conduit 42.

The valve means 41 comprises a sensible member 96 connected to the active portion 206 and provided with an operating surface 95 arranged for interacting, as will be explained better below, with an active profile 73 of a cam 45 (Figures 6 and 9).

The cam 45 is positioned on a shaft 46 extending in a direction substantially parallel to the first axis X (Figure 3).

The first valve means 70 and the third valve means 72 are not disclosed below inasmuch as they are constructionally and functionally similar to the second valve means 71.

It should be noted that the shaft 46 is provided with as many cams as there are valve means to drive, the aforesaid cams being mutually equidistant.

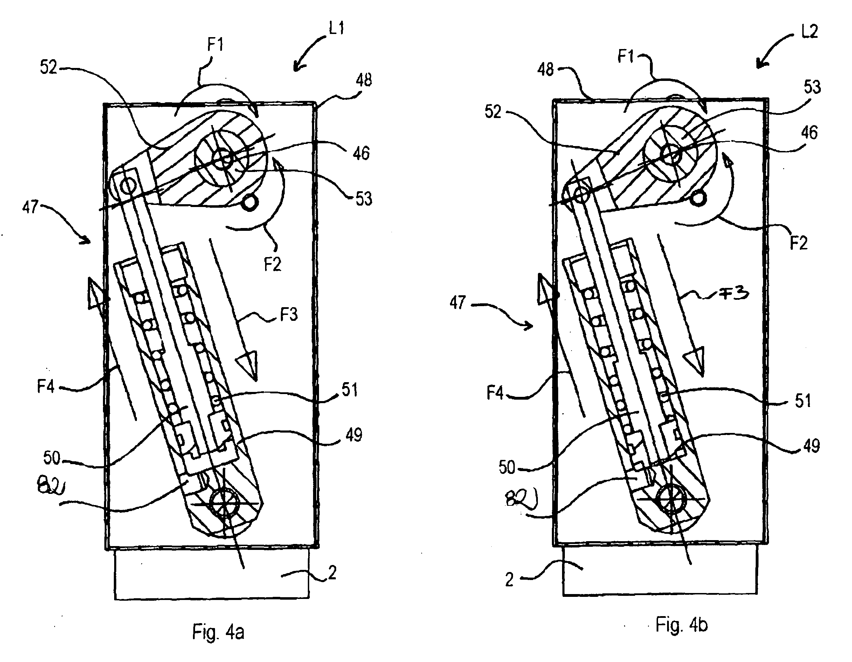

The shaft 46 is rotated through pneumatic driving means 47 (Figures 3, 4a and 4b) positioned in a box element 48 fixed to a side 400 of the main body 2.

The pneumatic driving means 47 comprises a frame 49.

The frame 49 is provided with an air intake hole 82 into which pressurised air is introduced that is dispensed by dispensing means, which is not shown.

The frame 49 is further arranged for receiving an actuator 50, between the actuator 50 and the frame 49 there being provided a further return spring 51.

The actuator 50 is connected to a crank 52 mounted on a freewheel 53 fixed to the shaft 46.

The freewheel 53 enables the crank 52 to rotate the shaft 46 in a rotation direction indicated by the first arrow F1 and prevents the crank 52 from rotating the shaft 46 in a further rotation direction indicated by the second arrow F2. In order to drive the actuator 50 it is sufficient to vary, through adjusting means that is not shown, the nominal air pressure value.

In particular, in use, the actuator 50 is maintained by the pressurised air, dispensed at the aforesaid nominal air pressure, in a raised configuration L1 (Figure 4a).

When it is desired to vary the dispensing of water the nominal air pressure in the dispensing means is lowered for a certain period of time through the adjusting means.

This period of time must be sufficient for enabling the further return spring 51 to move the actuator 50 in a direction indicated by the third arrow F3 until the further return spring 51 positions the latter in a lowered configuration L2 (Figure 4b).

The actuator 50, whilst it is moved in the direction indicated by the third arrow F3, rotates the crank 52 in the further rotation direction indicated by the second arrow F2. It should be noted that in turn the crank 52 rotates with respect to the freewheel 53 without transmitting this rotation to the shaft 46.

Subsequently, the adjusting means returns air pressure to the nominal air pressure value.

In this way, the actuator 50 moves from the lowered configuration L2 to the raised configuration L1, moving along a direction indicated by the fourth arrow F4.

The actuator 50, whilst it is moved in the direction indicated by the fourth arrow F4, rotates the crank 52 in the rotation direction indicated by the first arrow F1.

In turn, the crank 52 rotates the freewheel 53, which transmits this rotation to the shaft 46 enabling the latter to rotate by preset angular sectors the cams obtained therein.

The operating modes of the second valve means 71 are disclosed below.

With reference to Figures 5 to 7, there is shown the second valve means 71 in a first operating configuration A1.

In the first operating configuration A1 the second valve means 71 prevents a flow of water from flowing from the second intake conduit 12 to the second dispensing conduits 17.

In other words, in the first operating configuration A1, the plate 21 rests on an outlet hole 170 of the second intake conduit 12, shutting the outlet hole 170.

The first operating configuration A1 is made possible by the particular conformation of the valve body 20.

In fact, the valve body 20, owing to the passage 22 and the hole 23, connects the outlet hole 170 with the seat 6.

In this way, on the valve body 20, in the first operating configuration A1, two pressures are exerted having opposite application directions: a first pressure P1 exerted by the water on a surface 172 of the plate 21 and a second pressure P2 exerted by the water on the end surface 26.

As the end surface 26 has an extent that is greater than the surface 172, the second pressure P2 is greater than the first pressure P1, and the valve body 20 remains pressed against the outlet hole 170.

In order to move from the first operating configuration A1 to a second operating configuration A2, shown in detail in Figures 8 to 10, in which the second valve means 71 enables the flow of water to flow from the second intake conduit 12 to the second dispensing conduits 17, it is necessary to drive the actuator 50 as previously disclosed.

In other words, it is sufficient to decrease the nominal pressure of the air in the dispensing means of the air through the adjusting means, so as to move the actuator 50 from the raised configuration L1 to the lowered configuration L2 and subsequently return air pressure to nominal air pressure, in such a way as to move the actuator 50 from the lowered configuration L2 to the raised configuration L1.

In this way, by moving the actuator 50 from the raised configuration L1 to the lowered configuration L2 and vice versa, it is possible to rotate the crank 52 and the freewheel 53 by a preset angular sector and consequently rotate the shaft 46 in the direction indicated by the first arrow F1.

Following this rotation, the cam 45 interacts through the active profile 73 with the operating surface 95 of the sensible member 96 that moves the active portion 206 of the valve means 41 along the second axis Z, towards the second block 4.

In this way, a port 80 is defined between the active portion 206 and the further seat 40, which enables the water in the seat 6 to flow into the discharge conduit 42.

This causes an immediate decrease in the second pressure P2 exerted by the water on the end surface 26.

The second pressure P2 becomes less than the first pressure P1 and the valve body 20 is moved away from the second block 4, freeing the outlet hole 170 and enabling the flow of water to flow from the second intake conduit 12 to the second dispensing conduits 17.

To move from the second operating configuration A2 to the first operating configuration A1, it is sufficient to drive again the actuator 50, which will rotate the shaft 46 appropriately.

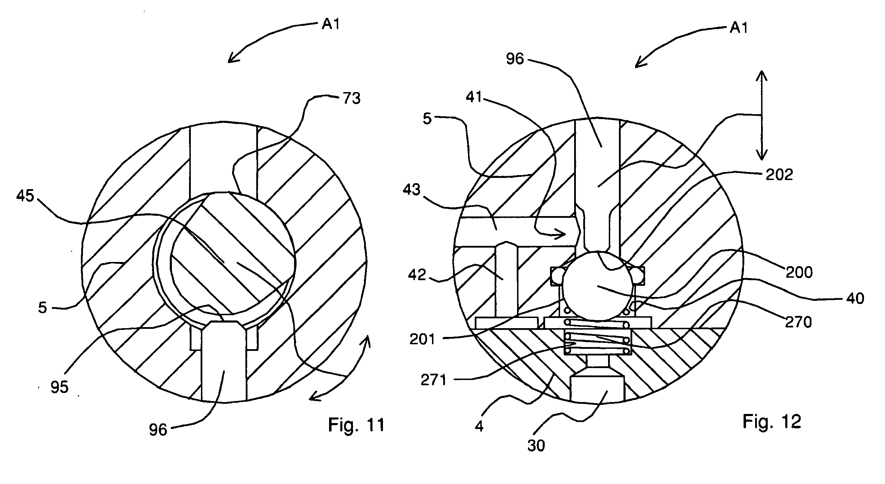

In an embodiment of the invention, illustrated in Figures 11 and 12, the valve means 41 comprises a ball 200 positioned in the further seat 40.

The ball 200 is provided with an active surface 201 arranged for interacting on one side with a further operating surface 202, opposite the operating surface 95, of the sensible member 96 and on another side with another return spring 270 positioned in a housing 271 obtained in the connecting conduit 30.

In use, following rotation of the shaft 46, the cam 45 interacts through the active profile 73 with the operating surface 95 of the sensible member 96, which by means of the further operating surface 202 interacts with the ball 200, moving the latter along the second axis Z towards the second block 4 and compressing the other return spring 271.

In this way, a further port is defined, which is not shown, between the ball 200 and the further seat 40, which enables the water in the seat 6 to flow into the discharge conduit 42.

This causes, as previously disclosed, an immediate diminution of the second pressure P2 exerted by the water on the end surface 26.

The second pressure P2 becomes less than the first pressure P1 and the valve body 20 is moved away from the second block 4, freeing the outlet hole 170 and enabling the flow of water to flow from the second intake conduit 12 to the second dispensing conduits 17.

In order to move from the second operating configuration A2 to the first operating configuration A1, it is sufficient to again drive the actuator 50, which rotates the shaft 46 suitably whilst the other return spring 271 moves the ball 200 along the second axis Z away from the second block 4.

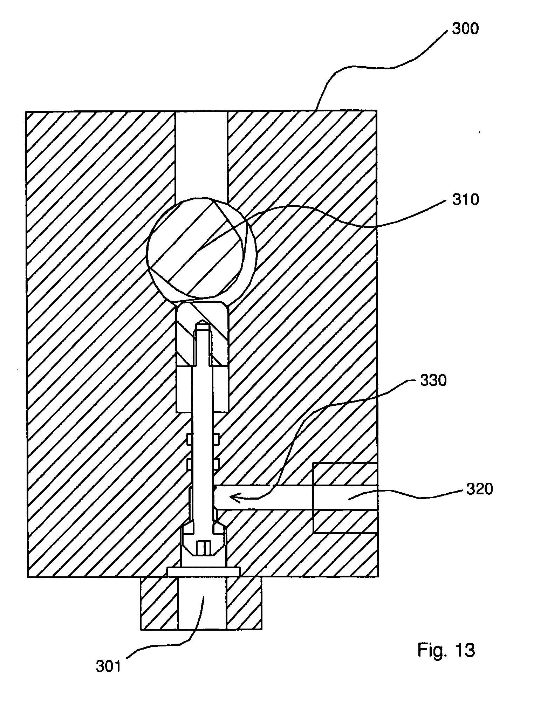

In an embodiment of the invention, shown in Figure 13, the shaft 46 of the dispensing apparatus 1 is provided with a further cam 310, that is substantially and functionally similar to the cam 45, arranged for driving further valve means 330 that is substantially and functionally similar to the valve means 41.

The further valve means 330 is inserted into an air dispensing module 300 associated with the dispensing apparatus 1 and arranged for adjusting a flow of air from the air dispensing means to the nucleating nozzles of the apparatus for making artificial snow.

The module 300 comprises an air intake conduit 301 connected to the air dispensing means and an air dispensing conduit 320 connected to the apparatus for making artificial snow, between the air intake conduit 301 and the air dispensing conduit 320 there being interposed the further valve means 330.

The air flow from the air dispensing means to the apparatus for making artificial snow is controlled by the shaft 46 which, through the further cam 45, drives, in the manner disclosed previously, the further valve means 330.

In an embodiment of the invention, which is not shown, the air intake conduit 301 is connected to further air dispensing means arranged for dispensing pressurised air.

In a still further embodiment of the invention, which is not shown, the dispensing apparatus 1 comprises further pneumatic driving means, associated with a further side 401, opposite the side 400, of the main body 2.

The further pneumatic driving means is substantially and functionally similar to the pneumatic driving means 47, and for this reason is not disclosed below, and is arranged for improving the operating precision of the shaft 46 and therefore of the dispensing apparatus 1.

It should be noted that it is possible to move the first valve means 70 and the third valve means 72 in the same manner as disclosed for the second valve means 71.

In particular, it should be noted that following any movement of the actuator 50 from the raised configuration L1 to the lowered configuration L2 and vice versa, it is possible to make the dispensing apparatus 1 dispense a variable quantity of water and air to the apparatus for making artificial snow.

It should be further noted that depending on the corresponding position of the cams on the shaft 46 it is possible to drive in a desired phase, or sequence, the first valve means 70, the second valve means 71, the third valve means 72 and the further valve means 330.

Again, it should be noted that the dispensing apparatus according to the invention is controlled by pressure differences or pulses and does not require electric energy to operate, with consequent reductions of the costs associated therewith.

Lastly, it should be noted how, for particular operating requirements, the shaft 46 can be operated manually through a knob 100 associated therewith and projecting from the further side 401.

## Claims

1. Dispensing apparatus for dispensing a flow of fluid, in particular water and/or air, to an apparatus for making artificial snow, comprising dispensing valve means (41, 70, 71, 72, 330) arranged for adjusting said flow of fluid to said apparatus, said dispensing valve means (41, 70, 71, 72, 330) comprising pilot valve means (41) which includes a plurality of pilot valves (41) each arranged for piloting a corresponding dispensing valve (70, 71, 72, 330), cam means (45, 310) for moving a sensible member (96) of said dispensing valve means (41, 70, 71, 72, 330), where by said cam means comprises a plurality of cams (45, 310), each of said cams (45, 310) being arranged for driving in sequence a corresponding dispensing valve (70, 71, 72, 330) of said dispensing valve means (41, 70, 71, 72, 330).

2. Dispensing apparatus according to claim 1, wherein each of said pilot valves (41) is interposed between a corresponding cam (45, 310) and a corresponding dispensing valve (70, 71, 72, 330).

3. Dispensing apparatus according to any preceding claim, wherein said cams (45, 310) are positioned along shaft means (46).

4. Dispensing apparatus according to any preceding claim, wherein said cams (45, 310) are substantially mutually equidistant.

5. Dispensing apparatus according to any preceding claim, and comprising pneumatic actuator means (50) arranged for rotating by preset angular sectors said cam means (45, 310).

6. Dispensing apparatus according to claim 5, as appended to claim 3, or 4, wherein crank means (52) is provided between said shaft means (46) and said pneumatic actuator means (50).

7. Dispensing apparatus according to claim 6, wherein between said crank means (52) and said shaft means (46) there is interposed freewheel means (53).

8. Dispensing apparatus according to any one of claims 5 to 7, wherein said pneumatic actuator means (50) is moved by pressurised air.

9. Dispensing apparatus according to any one of claims 5 to 8, and comprising adjusting means for adjusting a dispensing pressure value of said air.

10. Dispensing apparatus according to any one of claims 7 to 9, wherein said pneumatic actuator means comprises a pneumatic cylinder (50) arranged for driving said crank means (52) to rotate said freewheel means (53) in a rotation direction (F1).

11. Method for driving fluid dispensing means (1) arranged for dispensing a flow of fluid, in particular water and/or air, to an apparatus for making artificial snow, comprising controlling dispensing valve means (41, 70, 71, 72, 330) of said fluid dispensing means (1), said dispensing valve means (41, 70, 71, 72, 330) being arranged for adjusting said flow of fluid to said apparatus and comprising pilot valve means (41) which includes a plurality of pilot valves (41) each arranged for piloting a corresponding dispensing valve (70, 71, 72, 330), said driving comprising dispensing pressurised air to said fluid dispensing means (1), where by said controlling comprises driving in sequence said dispensing valve means (41, 70, 71, 72, 330) through a plurality of cams (45, 310).

12. Method according to claim 11, wherein said dispensing comprises varying a dispensing pressure value of said air.

13. Method according to claim 12, wherein said varying comprises reducing said dispensing pressure value to a further dispensing pressure value, said further dispensing pressure value being less than said dispensing pressure value.

14. Method according to claim 13, wherein after said reducing returning said further dispensing pressure value to said dispensing pressure value is provided.

## Patentansprüche

1. Abgabevorrichtung zum Abgeben eines Fluidstroms, insbesondere eines Wasser- und/oder Luftstroms, an eine Vorrichtung zur Herstellung von Kunstschnee, mit Abgabeventilmitteln (41, 70, 71, 72, 330), die zum Anpassen des Fluidstromes an die Vorrichtung ausgelegt sind, wobei die Abgabeventilmittel (41, 70, 71, 72, 330) Steuerventilmittel (41) aufweisen, die eine Mehrzahl von Steuerventilen (41) umfassen, von denen jedes zum Steuern eines entsprechenden Abgabeventils (70, 71, 72, 330) ausgelegt ist, mit Steuerlcurvenmitteln (45, 310) zum Bewegen eines beeinflussbaren Elements (96) der Abgabeventilmittel (41, 70, 71, 72, 330), wobei die Steuerkurvenmittel eine Mehrzahl von Steuerkurven (45, 310) aufweisen, wobei jede der Steuerkurven (45, 310) dazu ausgelegt ist, in Abfolge ein entsprechendes Abgabeventil (70, 71, 72, 330) der Abgabeventilmittel (41, 70, 71, 72, 330) anzutreiben.

2. Abgabevorrichtung nach Anspruch 1, wobei jedes der Steuerventile (41) zwischen einer entsprechenden Steuerkurve (45, 310) und einem entsprechenden Abgabeventil (70, 71, 72, 330) angeordnet ist.

3. Abgabevorrichtung nach einem vorhergehenden Anspruch, wobei die Steuerkurven (45, 310) entlang von Schaftmitteln (46) positioniert sind.

4. Abgabevorrichtung nach einem vorhergehenden Anspruch, wobei die Steuerkurven (45, 310) im Wesentlichen wechselseitig äquidistant sind.

5. Abgabevorrichtung nach einem vorhergehenden Anspruch, und mit pneumatischen Betätigungsmitteln (50), die zum Drehen der Steuerkurvenmittel (45, 310) um voreingestellte Winkelsektoren ausgelegt sind.

6. Abgabevorrichtung nach Anspruch 5, soweit dieser von Anspruch 3 oder 4 abhängig ist, wobei Kurbelmittel (52) zwischen den Schaftmitteln (46) und den pneumatischen Betätigungsmitteln (50) vorgesehen sind.

7. Abgabevorrichtung nach Anspruch 6, wobei zwischen den Kurbelmitteln (52) und den Schaftmitteln (46) Freilaufmittel (73) angeordnet sind.

8. Abgabevorrichtung nach einem der Ansprüche 5 bis 7, wobei die pneumatischen Betätigungsmittel (50) durch Druckluft bewegt werden.

9. Abgabevorrichtung nach einem der Ansprüche 5 bis 8, und mit Anpassmitteln zum Anpassen eines Abgabedruckwertes der Luft.

10. Abgabevorrichtung nach einem der Ansprüche 7 bis 9, wobei die pneumatischen Betätigungsmittel einen Pneumatikzylinder (50) aufweisen, der zum Antreiben der Kurbelmittel (52) ausgelegt ist, um die Freilaufmittel (53) in einer Drehrichtung (F1) zu drehen.

11. Verfahren zum Antreiben von Fluidabgabemitteln (1), die zum Abgeben eines Fluidstromes, insbesondere eines Wasser- und/oder Luftstroms, an eine Vorrichtung zur Herstellung von Kunstschnee ausgelegt sind, mit den Schritten: Steuern von Abgabeventilmitteln (41, 70, 71, 72, 330) der Fluidabgabemittel (1), wobei die Abgabeventilmittel (41, 70, 71, 72, 330) zum Anpassen des Fluidstromes an die Vorrichtung ausgelegt sind und Steuerventilmittel (41) aufweisen, die eine Mehrzahl von Steuerventilen (41) umfassen, von denen jedes zum Steuern eines entsprechenden Abgabeventils (70, 71, 72, 330) ausgelegt ist, wobei das Antreiben ein Abgeben von Druckluft an die Fluidabgabemittel (1) aufweist, wobei das Steuern ein Antreiben der Abgabeventilmittel (41, 70, 71, 72, 330) in Abfolge durch eine Mehrzahl von Steuerkurven (45, 310) aufweist.

12. Verfahren nach Anspruch 11, wobei das Abgeben ein Verändern eines Abgabedruckwertes der Luft aufweist.

13. Verfahren nach Anspruch 12, wobei das Verändern ein Vermindern des Abgabedruckwertes auf einen weiteren Abgabedruckwert aufweist, wobei der weitere Abgabedruckwert geringer ist als der Abgabedruckwert.

14. Verfahren nach Anspruch 13, wobei nach dem Vermindern ein Zurückstellen des weiteren Abgabedruckwertes auf den Abgabedruckwert vorgesehen ist.

## Revendications

1. Dispositif distributeur pour fournir un flux de fluide, en particulier d'eau et/ou d'air, à un dispositif de fabrication de neige artificielle, comprenant des moyens de vannes distributrices (41, 70, 71, 72, 330) prévus pour réguler ledit flux de fluide vers ledit dispositif, lesdits moyens de vannes distributrices (41, 70, 71, 72, 330) comprenant un moyen (41) à vannes pilotes qui comprend une pluralité de vannes pilotes (41) chacune prévue pour piloter une vanne distributrice correspondante (70, 71, 72, 330), des moyens de came (45, 310) destinés à déplacer un élément sensible (96) desdits moyens de vannes distributrices (41, 70, 71, 72, 330), lesdits moyens de came comprenant une pluralité de cames (45, 310), chacune desdites cames (45, 310) étant prévue pour entraîner en séquence une vanne distributrice correspondante (70, 71, 72, 330) desdits moyens de vannes distributrices (41, 70, 71, 72, 330).

2. Dispositif distributeur selon la revendication 1, dans lequel chacune desdites vannes pilotes (41) est interposée entre une came correspondante (45, 310) et une vanne distributrice correspondante (70, 71, 72, 330).

3. Dispositif distributeur selon l'une quelconque des revendications précédentes, dans lequel lesdites cames (45, 310) sont placées le long de moyens d'arbre (46).

4. Dispositif distributeur selon l'une quelconque des revendications précédentes, dans lequel lesdites cames (45, 310) sont sensiblement équidistantes entre elles.

5. Dispositif distributeur selon l'une quelconque des revendications précédentes, et comprenant des moyens d'actionneur pneumatique (50) prévus pour faire tourner par secteurs angulaires prédéfinis lesdits moyens de came (45, 310).

6. Dispositif distributeur selon la revendication 5, lorsqu'elle est dépendante de la revendication 3 ou 4, dans lequel des moyens de manivelle (52) sont prévus entre lesdits moyens d'arbre (46) et lesdits moyens d'actionneur pneumatique (50).

7. Dispositif distributeur selon la revendication 6, dans lequel, entre lesdits moyens de manivelle (52) et lesdits moyens d'arbre (46), sont interposés des moyens de roue libre (53).

8. Dispositif distributeur selon l'une quelconque des revendications 5 à 7, dans lequel lesdits moyens d'actionneur pneumatique (50) sont mus par de l'air sous pression.

9. Dispositif distributeur selon l'une quelconque des revendications 5 à 8, et comprenant des moyens de régulation pour réguler une valeur de pression de distribution dudit air.

10. Dispositif distributeur selon l'une quelconque des revendications 7 à 9, dans lequel lesdits moyens d'actionneur pneumatique comprennent un cylindre pneumatique (50) prévus pour entraîner lesdits moyens de manivelle (52) afin de faire tourner lesdits moyens de roue libre (53) dans une direction de rotation (F1).

11. Procédé d'entraînement de moyens (1) de distribution d'un fluide prévus pour fournir un flux de fluide, en particulier d'eau et/ou d'air, à un dispositif de fabrication de neige artificielle, comprenant le contrôle de moyens de vannes distributrices (41, 70, 71, 72, 330) desdits moyens (1) de distribution de fluide, lesdits moyens de vannes distributrices (41, 70, 71, 72, 330) étant prévus pour réguler ledit flux de fluide vers ledit dispositif et comprenant un moyen (41) à vannes pilotes qui comprend une pluralité de vannes pilotes (41) chacune prévue pour piloter une vanne distributrice correspondante (70, 71, 72, 330), ledit entraînement comprenant la fourniture d'air sous pression auxdits moyens (1) de distribution de fluide, ledit contrôle comprenant l'entraînement en séquence desdits moyens de vannes distributrices (41, 70, 71, 72, 330) par l'intermédiaire d'une pluralité de cames (45,310).

12. Procédé selon la revendication 11, dans lequel ladite fourniture comprend la variation d'une valeur de pression de distribution dudit air.

13. Procédé selon la revendication 12, dans lequel ladite variation comprend la réduction de ladite valeur de pression de distribution jusqu'à une autre valeur de pression de distribution, ladite autre valeur de pression de distribution étant inférieure à ladite valeur de pression de distribution.

14. Procédé selon la revendication 13, dans lequel, après ladite réduction, le retour de ladite autre valeur de pression de distribution à ladite valeur de pression de distribution est réalisé.
